# EUROPÄISCHE PATENTSCHRIFT

(11) **EP 3 019 714 B1**
(45) Veröffentlichungstag und Bekanntmachung des Hinweises auf die Patenterteilung: **02.08.2017**
(21) Anmeldenummer: 14758827.1
(22) Anmeldetag: 26.08.2014
(51) Int. Cl.: F01D 25/24, F02C 7/18, F02C 9/18

(54) **KÜHLLUFTLEITUNG ZUR ENTNAHME VON KÜHLLUFT AUS EINEM MANNLOCH EINER GASTURBINE**
COOLING AIR LINE FOR REMOVING COOLING AIR FROM A MANHOLE OF A GAS TURBINE
CONDUIT D'AIR DE REFROIDISSEMENT POUR PRÉLEVER DE L'AIR DE REFROIDISSEMENT À PARTIR D'UN TROU D'HOMME D'UNE TURBINE À GAZ

(30) Priorität: 10.09.2013 DE 102013218093
(43) Veröffentlichungstag der Anmeldung: 18.05.2016
(73) Patentinhaber: Siemens Aktiengesellschaft, 80333 München (DE)
(72) Erfinder: KREUTZER, Philipp, 45721 Haltern am See (DE); LINK, Marco, 45476 Mülheim (DE); STERNEMANN, Ansgar, 44623 Herne (DE)
(86) Internationale Anmeldenummer: PCT/EP2014/068065
(87) Internationale Veröffentlichungsnummer: WO 2015/036233

(56) Entgegenhaltungen:
- DE-A1- 19 821 889
- DE-A1- 19 936 170
- DE-A1-102004 057 985
- DE-A1-102008 044 442
- JP-A- 2012 202 242

## Beschreibung

Die Erfindung betrifft eine Gasturbine mit einem Verdichter, einer Turbineneinheit, mindestens einer Brennkammer und einem Sekundärluftsystem, welches Sekundärluftsystem zumindest eine Kühlluftleitung mit einem verdichterseitigen Einlass zur Entnahme von Kühlluft aus dem Verdichter und einen turbinenseitigen Auslass zur Weiterleitung der Kühlluft in die Turbineneinheit aufweist.

Im Teillastbetrieb einer Gasturbine fällt die Verbrennungstemperatur in der Brennkammer typischerweise ab. Dadurch fällt ebenfalls die für CO-Emissionen relevante Primärzonen-Temperatur (TPZ), d.h. also auch die Brennkammertemperatur. Wenn ein vorgegebener Minimalwert der TPZ unterschritten wird (bspw. TPZ < 1400°C für 10ppmv CO Emission) werden verstärkt CO-Emissionen erzeugt, wodurch die Grenze des nutzbaren CO emissionskonformen Teillastbereichs der Gasturbine erreicht ist. Durch diesen Umstand kann der Betreiber der Gasturbine bei Vorliegen eines gesetzlichen CO-Emissionsgrenzwerts gezwungen sein, seine Gasturbine abzuschalten, da es für ihn mitunter nicht mehr möglich ist, die Leistung seiner Gasturbine weiter zu reduzieren, ohne gleichzeitig den für ihn gültigen CO-Emissionsgrenzwert zu überschreiten.

Eine der Anmelderin aus dem internen Stand der Technik bekannte technische Lösung zur Reduzierung der CO-Emissionen im Teillastbetrieb betrifft das Abzweigen und Umleiten von Kühlluft, um so die Verdichteraustrittsluftmenge zu reduzieren, die in die Brennkammer eintritt. Dadurch kann die Verbrennung in der Brennkammer unter einer relativ größeren Menge an Brennstoff bei einer relativ größeren TPZ erfolgen, wodurch die CO-Emissionen verringert werden. Die zum Umleiten und Abzweigen von Kühlluft erforderlichen Rohrleitungen, bzw. die meist als Ab- und Zuleitungsstutzen ausgebildeten Rohrleitungsenden sind hierbei an dem Gasturbinengehäuse fest angebracht. Bei diesen Bauteilen und deren Anordnung ist insbesondere darauf zu achten, dass die mechanische wie auch die betriebstechnische Stabilität der Gasturbine nicht wesentlich beeinflusst wird.

Weiter ist auch bei der Anbringung der Rohrleitungen, bzw. der Rohrleitungsenden darauf zu achten, dass die Zugänglichkeit der Gasturbine für Wartungszwecke nicht wesentlich behindert wird. Insofern sind einer Anbringung solcher Rohrleitungen stabilitätstechnische, betriebstechnische wie auch wartungstechnische Grenzen auferlegt.

Aufgabe der vorliegenden Erfindung ist es, eine verbesserte Anbringung einer Kühlluftleitung an einer Gasturbine vorzuschlagen, welche einerseits eine einfache Anbringung der Kühlluftleitung an der Gasturbine ermöglicht, und andererseits die Zugänglichkeit der Gasturbine nicht wesentlich einschränkt. Insbesondere soll die Anbringung der Kühlluftleitung an der Gasturbine in einem Bereich erfolgen, welcher geringe betriebstechnische Einschränkungen, wie etwa eine grundlegende Beeinflussung des Strömungsverhaltens der Verdichterendluft zur Folge hat.

Gasturbinen gemäß dem Stand der Technik sind aus DE102004057985 und DE19936170 bekannt. Diese der Erfindung zugrunde liegenden Aufgaben werden gelöst durch eine Gasturbine nach Anspruch 1.

Insbesondere werden die der Erfindung zugrunde liegenden Aufgaben gelöst durch eine Gasturbine mit einem Verdichter, einer Turbineneinheit, mindestens einer Brennkammer und einem Sekundärluftsystem, welches Sekundärluftsystem zumindest eine Kühlluftleitung mit einem verdichterseitigen Einlass zur Entnahme von Kühlluft aus dem Verdichter und einen turbinenseitigen Auslass zur Weiterleitung der Kühlluft in die Turbineneinheit aufweist, wobei die Kühlluftleitung am verdichterseitigen Einlass mit einer Gehäuseöffnung der Gasturbine strömungstechnisch verbunden ist, welche an einem Hohlraum der Gasturbine angrenzt, die im Betrieb Verdichterluft führt, und wobei die Gehäuseöffnung als Mannloch ausgebildet ist.

Durch die Ausbildung der Gehäuseöffnung als Mannloch erhält man einerseits leichten Zugang zu der Gasturbine, ohne gleichzeitig die Zugänglichkeit der Gasturbine für Wartungszwecke wesentlich beeinträchtigen zu müssen. Andererseits kann die Gasturbine auch mit einer Kühlluftleitung versehen werden, ohne hierzu andere Gehäuseteile der Gasturbine mechanisch bearbeiten oder verändern zu müssen. Dies betrifft insbesondere solche Gehäuseteile, die bei Veränderung für die Gasturbine betriebstechnische Einschränkungen zur Folge haben könnten, etwa indem das grundlegende Strömungsverhalten der Verdichterendluft in der Gasturbine beeinflusst würde.

An dieser Stelle ist darauf hinzuweisen, dass die Kühlluftleitung mehrere Bauteile umfassen kann, etwa Rohrleitungen, Stutzen, Flansche, Anschlussstücke, usw.. Eine Kühlluftleitung soll somit vorliegend hinsichtlich seines Bedeutungsumfangs breit ausgelegt werden. Im Wesentlichen ist die Kühlluftleitung zu verstehen als Kühlluftsystem, welches die Gehäuseöffnung im Bereich des Verdichters mit der Turbineneinheit strömungstechnisch verbindet.

Weiterhin ist darauf hinzuweisen, dass ein Mannloch als Zugangsöffnung zu verstehen ist, welche dazu ausgebildet ist, bei Ausführen von Wartungsarbeiten an der Gasturbine, dem Wartungspersonal den Zugang zum Inneren der Gasturbine zu erlauben. Hierbei ist ein Mannloch normalerweise ausreichend groß ausgebildet, so dass eine Person durch diese Öffnung wenigstens teilweise mit dem Rumpf bzw. dem Oberkörper in das Innere der Gasturbine gelangen kann.

Gemäß einer ersten bevorzugten Ausführungsform der Erfindung ist vorgesehen, dass die Kühlluftleitung zumindest eine Rohrleitung und ein Adapterstück umfasst, wobei das gehäuseöffnungsseitige Ende der Rohrleitung an dem Adapterstück angeschlossen ist, welches Adapterstück über eine erste Öffnung mit der Gehäuseöffnung verbunden ist. Der Adapter kann hierbei insbesondere als Doppelstutzen ausgeführt sein, an welchem die wenigstens eine Rohrleitung angebracht ist. Die Anbringung erfolgt hierbei etwa über geeignete Anschlussöffnungen. Das Adapterstück ist ausführungsgemäß so ausgebildet, dass seine erste Öffnung eine passende Form zur Verbindung mit der Gehäuseöffnung der Gasturbine aufweist. Insbesondere ist die erste Öffnung gegenpassförmig zur Gehäuseöffnung ausgebildet. Ausführungsgemäß kann so etwa das Sekundärluftsystem der Gasturbine modifiziert werden, ohne eine bauliche Änderung an der Gasturbine durchführen zu müssen, da alle baulichen Änderungen an dem Adapterstück selbst bzw. der wenigstens einen Rohrleitung vorgenommen werden können.

Gemäß einer weiteren bevorzugten Ausführungsform der Erfindung ist vorgesehen, dass bei der Gasturbine das Adapterstück eine der ersten Öffnung gegenüberliegende zweite Öffnung aufweist, welche zweite Öffnung als Mannloch ausgestaltet ist und mit einem davon lösbaren Deckel verschlossen werden kann. Somit bleibt die Zugänglichkeit der Gasturbine weiterhin erhalten, ohne dass noch zusätzliche Mannlöcher an dem Gasturbinengehäuse angebracht werden müssten.

Gemäß einer weiterführenden Ausführungsform der Erfindung ist vorgesehen, dass das Adapterstück Anschlussstücke bzw. Anschlussflansche aufweist, über welche die wenigstens eine Rohrleitung an dem Adapterstück angeschlossen werden kann. Somit kann eine wartungsfreundliche modulare Bauweise erreicht werden, die auch etwa einen gezielten Austausch einzelner Bauteile, etwa einzelner Rohrleitungen ermöglicht. Zudem kann der Zusammenbau der Kühlluftleitug vor Ort deutlich erleichtert werden. Weist das Adapterstück zudem etwa eine Anzahl an solchen Anschlussstücken bzw. Anschlussflanschen auf, die größer ist als die Anzahl der Rohrleitungen, kann auch nachträglich noch das Sekundärluftsystem leicht erweitert werden. Die Anschlussstücke bzw. Anschlussflanschen können ebenfalls mit einem geeignet geformten Deckel verschlossen werden.

Gemäß einer weiteren vorteilhaften Ausführungsform der Erfindung ist vorgesehen, dass die Gasturbine mindestens zwei bzw. genau zwei Rohrleitungen aufweist, in denen Stellorgane zur Einstellung der Durchflussmenge angeordnet sind. Folglich ist die aus der Gehäuseöffnung entnommene Menge an Kühlluft dosierbar, wodurch auch etwa strömungstechnischen Einschränkungen aufgrund der bauteiltechnischen Erweiterung Rechnung getragen werden kann.

Nachfolgend soll die Erfindung anhand von einzelnen Figuren im Detail beschrieben werden. Hierbei ist darauf hinzuweisen, dass die Figuren lediglich schematisch zu verstehen sind, und keine Einschränkung hinsichtlich der Ausführbarkeit der Erfindung darstellen.

Weiter sei darauf hingewiesen, dass Bauteile mit gleichen Bezugszeichen gleiche technische Wirkungsweisen haben.

Ebenso sei darauf hingewiesen, dass vorliegend die in den Figuren dargestellten technischen Merkmale in beliebiger Kombination miteinander beansprucht werden, soweit diese Kombination die der Erfindung zugrundeliegenden Aufgaben lösen kann.

Hierbei zeigen:
- Figur 1: eine erste Ausführungsform der erfindungsgemäßen Gasturbine 1 in schematischer seitlicher Schnittdarstellung;
- Figur 2: eine weitere Ausführungsform der erfindungsgemäßen Gasturbine 1 in perspektivischer seitlicher Darstellung, jedoch ohne Rohrleitungen;
- Figur 3: eine Ausführungsform von Rohrleitungen 25, wie sie etwa in einer Gasturbine 1 nach Figur 2 verschaltet sein können, in perspektivischer seitlicher Darstellung.

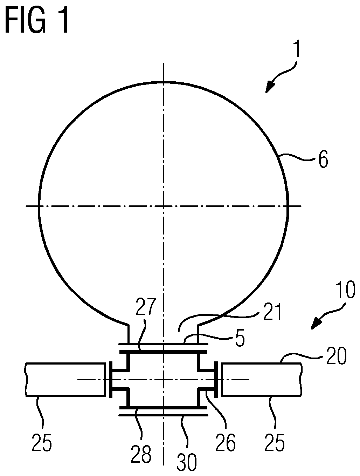

Figur 1 zeigt eine erste Ausführungsform der erfindungsgemäßen Gasturbine 1 in schematischer seitlicher Schnittdarstellung mit Schnitt durch einen Bereich des Verdichters. Die Gasturbine 1 weist ein Gehäuse 6 auf, welches eine Gehäuseöffnung 5 umfasst, die als Mannloch ausgebildet ist. Ausführungsgemäß ist die Gehäuseöffnung 5 als Anschlussstutzen ausgebildet, an welchem über einen Flansch (nicht mit Bezugszeichen versehen), weitere Bauteile angeschlossen werden können. Gasturbinen, die aus dem Stand der Technik bekannt sind, sind hierbei an diesem Flansch mit einem lösbaren Deckel 30 verschlossen, welcher lediglich zur Ausführung von Wartungsarbeiten geöffnet wird.

Gemäß der vorliegenden Ausführungsform der Erfindung weist nun die Gasturbine 1 ein Adapterstück 26 auf, welches einseitig mit der Gehäuseöffnung 5 fluidtechnisch verbunden ist. Typischerweise weist hierzu das Adapterstück 26 einen Gegenflansch auf, welcher mit dem Flansch des Stutzens der Gehäuseöffnung 5 verbunden werden kann. Die Verbindung erfolgt hierbei über eine erste Öffnung 27 des Adapterstücks 26, welcher eine zweite Öffnung 28 des Adapterstücks 26 gegenüber liegend angeordnet ist. Diese zweite Öffnung 28 kann mit einem lösbaren Deckel 30 verschlossen werden. Senkrecht zu der Verbindungslinie von erster Öffnung 27 und zweiter Öffnung 28 des Adapterstücks 26 sind an dem Adapterstück 26 weitere Anschlusstücke bzw. Anschlussstutzen vorgesehen, über welche Rohrleitungen 25 angeschlossen werden können. Die Verbindung zwischen Adapterstück 26 und Rohrleitungen 25 erfolgt hierbei wiederum mittels geeigneter Verbindungsflansche.

Das Adapterstück 26 und die Rohrleitungen 25 formen einen Teil eines Sekundärluftsystems 10. Das Sekundärluftsystem 10 umfasst eine Kühlluftleitung 20, die ebenso das Adapterstück 26 und die Rohrleitungen 25 aufweist. An dem verdichterseitigen Einlass 21 der Kühlluftleitung 20 befindet sich die mit der Gehäuseöffnung 5 verbundene erste Öffnung 27 des Adapterstücks 26 und ermöglicht so die Entnahme von Kühlluft aus dem Verdichter (vorliegend nicht gezeigt). Diese Kühlluft kann einem turbinenseitigen Auslass (vorliegend auch nicht gezeigt) an der Turbineneinheit (vorliegend auch nicht gezeigt) zugeleitet werden.

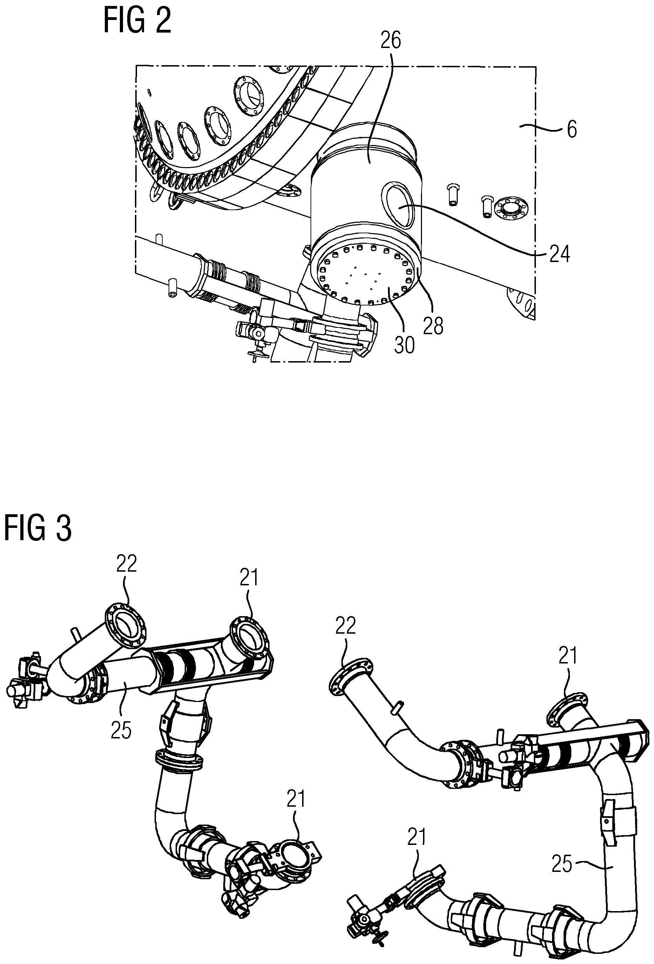

Figur 2 zeigt eine weitere Ausführungsform der erfindungsgemäßen Gasturbine 1 in perspektivischer seitlicher Darstellung, jedoch ohne Rohrleitungen 25. Hierbei ist das Adapterstück 26 unterhalb des Gehäuses 6 der Gasturbine 1 angebracht, und ermöglicht über Anschlussöffnungen 24 den seitlichen Anschluss von Rohrleitungen 25 (vorliegend nicht gezeigt). Das Adapterstück 26 ist endständig auf einer von der Gasturbine 1 weg weisenden Seite mit einem lösbaren Deckel 30 versehen, welcher für Wartungsarbeiten entfernt werden kann. Hierbei ist darauf hinzuweisen, dass die vom Deckel 30 verdeckte zweite Öffnung 28 des Adapterstücks 26 im Wesentlichen der Größe der ersten Öffnung 27 entspricht, welche mit der Gehäuseöffnung 5 verbunden ist. Somit kann gewährleistet werden, dass die Zugänglichkeit der Gasturbine 1 weiterhin gegeben ist. Beide Öffnungen 27 und 28 sind also als Mannlöcher ausgebildet.

Figur 3 zeigt eine Ausführungsform von zwei Rohrleitungen 25, wie sie etwa in einer Gasturbine 1 nach Figur 2 verschaltet sein können, in perspektivischer seitlicher Darstellung. Hierbei weist die Kühlluftleitung 20 einen verdichterseitigen Einlass 21 zur Entnahme von Kühlluft aus dem Verdichter und einen turbinenseitigen Auslass 22 zur Weiterleitung der Kühlluft in die Turbineneinheit auf.

Weitere Ausführungsformen ergeben sich aus den Unteransprüchen.

## Patentansprüche

1. Gasturbine (1) mit einem Verdichter, einer Turbineneinheit, mindestens einer Brennkammer und einem Sekundärluftsystem (10), welches Sekundärluftsystem (10) zumindest eine Kühlluftleitung (20) mit einem verdichterseitigen Einlass (21) zur Entnahme von Kühlluft aus dem Verdichter (2) und einen turbinenseitigen Auslass (22) zur Weiterleitung der Kühlluft in die Turbineneinheit (3) aufweist,
wobei die Kühlluftleitung (20) am verdichterseitigen Einlass (21) mit einer Gehäuseöffnung (5) der Gasturbine (1) strömungstechnisch verbunden ist, welche an einem Hohlraum der Gasturbine (1) angrenzt, die im Betrieb Verdichterluft führt,
**dadurch gekennzeichnet, dass**
die Gehäuseöffnung (5) als Mannloch ausgebildet ist.

2. Gasturbine nach Anspruch 1,
wobei die Kühlluftleitung (20) zumindest eine Rohrleitung (25) und ein Adapterstück (26) umfasst, wobei das gehäuseöffnungsseitige Ende der Rohrleitung (25) an dem Adapterstück (26) angeschlossen ist, welches Adapterstück (26) über eine erste Öffnung (27) mit der Gehäuseöffnung (5) verbunden ist.

3. Gasturbine nach Anspruch 2,
bei der das Adapterstück (26) eine der ersten Öffnung (27) gegenüberliegende zweite Öffnung (28) aufweist, welche zweite Öffnung (28) als Mannloch ausgestaltet ist und mit einem davon lösbaren Deckel (30) verschlossen werden kann.

4. Gasturbine nach Anspruch 2 oder 3,
welche zwei Rohrleitungen (25) aufweist, in denen Stellorgane zur Einstellung der Durchflussmenge angeordnet sind.

## Claims

1. Gas turbine (1) having a compressor, a turbine unit, at least one combustion chamber and a secondary air system (10), which secondary air system (10) has at least one cooling air line (20) with a compressor-side inlet (21) for drawing cooling air from the compressor (2) and a turbineside outlet (22) for conveying the cooling air into the turbine unit (3),
wherein the cooling air line (20) is fluidically connected, at the compressor-side inlet (21), to a casing opening (5) of the gas turbine (1) which adjoins a cavity of the gas turbine (1) which, in operation, conveys compressor air, **characterized in that**
the casing opening (5) is designed as a manhole.

2. Gas turbine according to Claim 1,
wherein the cooling air line (20) comprises at least one pipe (25) and an adapter part (26), wherein the casing-opening-side end of the pipe (25) is connected to the adapter part (26), which adapter part (26) is connected to the casing opening (5) via a first opening (27).

3. Gas turbine according to Claim 2,
in which the adapter part (26) has a second opening (28) opposite the first opening (27), which second opening (28) is configured as a manhole and can be closed with a removable cover (30).

4. Gas turbine according to Claim 2 or 3,
which has two pipes (25), in which are arranged valves for setting the throughflow quantity.

## Revendications

1. Turbine (1) à gaz, comprenant un compresseur, un groupe turbine, au moins une chambre de combustion et un système (10) d'air secondaire, lequel système (10) d'air secondaire a au moins un conduit (20) pour de l'air de refroidissement, ayant une entrée (21) du côté du compresseur, pour prélever de l'air de refroidissement du compresseur (2) et une sortie (22) du côté de la turbine, pour acheminer l'air de refroidissement au groupe (3) turbine,
dans laquelle le conduit (20) pour de l'air de refroidissement est, à l'entrée (21) du côté du compresseur, relié en technique d'écoulement à une ouverture (5) de carcasse de la turbine (1) à gaz, ouverture qui est voisine d'une cavité de la turbine (1) à gaz, qui, en fonctionnement, conduit de l'air de compresseur,
**caractérisée en ce que** l'ouverture (5) de carcasse est constituée sous la forme d'un trou d'homme.

2. Turbine à gaz suivant la revendication 1,
dans laquelle le conduit (20) pour de l'air de refroidissement comprend au moins une canalisation (25) et une pièce (26) formant adaptateur, l'extrémité, du côté de l'ouverture de la carcasse de la canalisation (25), étant raccordée à la pièce (26) formant adaptateur, laquelle pièce (26) formant adaptateur est reliée à l'ouverture (5) de la carcasse, par une première ouverture (27).

3. Turbine à gaz suivant la revendication 2,
dans laquelle la pièce (26) formant adaptateur a une deuxième ouverture (28) opposée à la première ouverture (27), laquelle deuxième ouverture (28) est constituée en trou d'homme et peut être fermée par un couvercle (30), qui peut en être retiré.

4. Turbine à gaz suivant la revendication 2 ou 3,
qui a deux canalisations (25), dans lesquelles sont montés des organes de réglage du débit.
